# EUROPEAN PATENT APPLICATION

(11) **EP 3 643 192 A1**
(43) Date of publication of application: **29.04.2020**
(21) Application number: 19205234.8
(22) Date of filing: 25.10.2019
(51) Int. Cl.: A43B 7/12, A43B 23/02

(54) **WATERPROOF AND BREATHABLE UPPER**

(30) Priority: 25.10.2018 CN 201811246917
(71) Applicant: Qingyuan Global Technology Services Ltd., Qingyuan City, 51180 Guangdong (CN)
(72) Inventor: LUH, Yih-Ping, Taipei City 104 (TW)
(74) Representative: dompatent von Kreisler Selting Werner - Partnerschaft von Patent- und Rechtsanwälten mbB

(57) **Abstract**

A waterproof and breathable upper comprises a fabric upper, a water-repellent structure, and a breathable waterproof film. The fabric upper has a first surface and a second surface, and the first surface is opposite to the second surface. The water-repellent structure is formed on the first surface of the fabric upper. The breathable waterproof film is formed on the second surface of the fabric upper.

## Description

### BACKGROUND

### Technical Field

The present invention relates to an upper, and in particular, to a waterproof and breathable upper.

### Related Art

In design of shoes worn by people in daily life, apart from pretty appearance, effort has been also made to improve the properties for wearing comfort, breathability, and waterproof of the shoes.

There are various types of shoes on the market currently, for example, leisure shoes, sneakers, and long and short boots. Shoes with uppers made of cloths or textiles can effectively discharge sweat and moisture from feet, but it cannot prevent penetration of external moisture. In contrast, although shoes with leather uppers can effectively prevent penetration of external moisture, it cannot effectively discharge sweat and moisture from feet.

Therefore, it is necessary to provide shoes with both a waterproof effect and a breathable effect.

### SUMMARY

The present invention provides a waterproof and breathable upper, which can have both a waterproof effect and a breathable effect.

The present invention provides a waterproof and breathable upper, including a fabric upper, a water-repellent structure, and a breathable waterproof film. The fabric upper has a first surface and a second surface, and the first surface is opposite to the second surface. The water-repellent structure is formed on the first surface of the fabric upper. The breathable waterproof film is formed on the second surface of the fabric upper.

In an embodiment, the fabric upper includes a knitted upper or a woven upper.

In an embodiment, the water-repellent structure is formed by a chemical coating.

In an embodiment, a material of the breathable waterproof film includes a thermoplastic elastomer (TPE).

In an embodiment, the water-repellent structure faces an outer layer of the waterproof and breathable upper, and the breathable waterproof film faces an inner layer of the waterproof and breathable upper.

In an embodiment, the water-repellent structure covers the first surface of the fabric upper by means of spraying or surface coating.

In an embodiment, the breathable waterproof film is adhered to the second surface of the fabric upper by means of hot-pressing.

The waterproof and breathable upper can have both a waterproof effect and a breathable effect.

### BRIEF DESCRIPTION OF THE DRAWINGS

FIG. 1 is a side view of a waterproof and breathable upper according to a preferred embodiment of the present invention; and
FIG. 2 is a cross-sectional schematic view of FIG. 1.

### Description of main reference numerals:

100 Waterproof and breathable upper
102 Outer layer
104 Inner layer
110 Fabric upper
111 First surface
112 Second surface
120 Water-repellent structure
130 Breathable waterproof film

### DETAILED DESCRIPTION

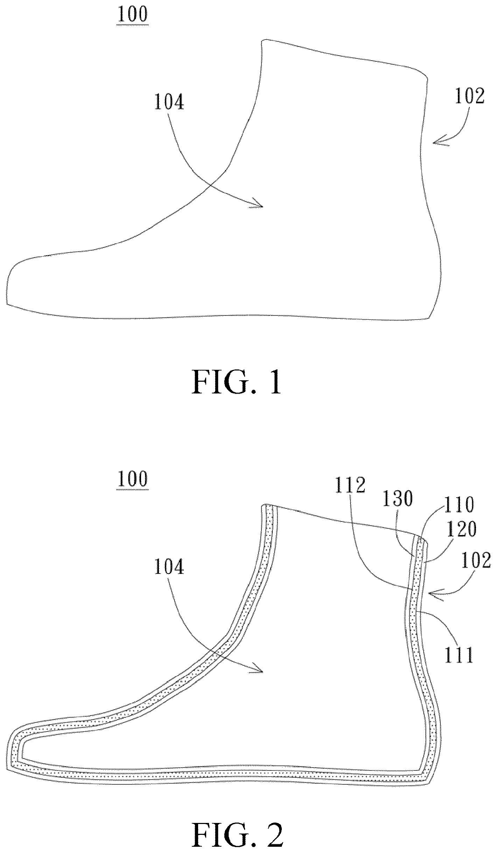

Referring to FIG. 1 and FIG. 2, FIG. 1 is a side view of a waterproof and breathable upper according to a preferred embodiment of the present invention, and FIG. 2 is a cross-sectional schematic view of FIG. 1. The waterproof and breathable upper 100 according to the present invention may be applied to various types of shoes, for example, leisure shoes, sneakers, gym shoes, and long and short boots.

As shown in FIG. 2, the waterproof and breathable upper 100 includes a fabric upper 110, a water-repellent structure 120, and a breathable waterproof film 130. The fabric upper 110 has a first surface 111 and a second surface 112, where the first surface 111 is opposite to the second surface 112. In this embodiment, the first surface 111 faces an outer layer 102 of the waterproof and breathable upper 100, and the second surface 112 faces an inner layer 104 of the waterproof and breathable upper 100. In an embodiment, the fabric upper 110 is preferably, but is not limited to, a knitted upper or a woven upper.

The water-repellent structure 120 is formed by a chemical coating with a water-repellent capability. A forming method of the water-repellent structure 120 includes, but is not limited to, forming or covering the water-repellent structure 120 on the first surface 111 of the fabric upper 110 by means of spraying or surface coating.

The breathable waterproof film 130 is formed on the second surface 112 of the fabric upper 110. A forming method of the breathable waterproof film 130 includes, but is not limited to, forming or adhering the breathable waterproof film 130 on the second surface 112 of the fabric upper 110 by means of hot-pressing. In this embodiment, a material of the breathable waterproof film 130 is preferably a thermoplastic elastomer (TPE).

As shown in FIG. 2, because the outer layer 102 of the waterproof and breathable upper 100 according to the present invention is provided with the water-repellent structure 120, a surface tension thereof can be increased, thus keeping out external water molecules while still allowing air to pass, so that water-repellent and breathable functions can be achieved effectively. On the other hand, even if water molecules possibly pass through the water-repellent structure 120 to reach the fabric upper 110 in the case of encountering a large amount of water, because the inner layer 104 of the waterproof and breathable upper 100 according to the present invention is further provided with the breathable waterproof film 130, water molecules can be effectively kept out of the breathable waterproof film 130, thus preventing the water molecules from entering the shoes.

In conclusion, the waterproof and breathable upper according to the present invention can effectively keep external water molecules out of the water-repellent structure and still allow air to pass. Even in the case of encountering a large amount of water, water molecules can still be effectively kept out of the breathable waterproof film to prevent the water molecules from entering the shoes, thus achieving the water-repellent and breathable functions.

The present invention has been described through the related embodiments above. However, the foregoing embodiments are merely examples for implementing the present invention. It should be noted that, the disclosed embodiments do not limit the scope of the present invention. On the contrary, modifications and equivalent settings included in the spirit and scope of the claims are all encompassed in the scope of the present invention.

## Claims

1. A waterproof and breathable upper, comprising:
a fabric upper, having a first surface and a second surface, and the first surface being opposite to the second surface;
a water-repellent structure, formed on the first surface of the fabric upper; and
a breathable waterproof film, formed on the second surface of the fabric upper.

2. The waterproof and breathable upper according to claim 1, wherein the fabric upper comprises a knitted upper or a woven upper.

3. The waterproof and breathable upper according to claim 1, wherein the water-repellent structure is formed by a chemical coating.

4. The waterproof and breathable upper according to claim 1, wherein a material of the breathable waterproof film comprises a thermoplastic elastomer (TPE).

5. The waterproof and breathable upper according to claim 1, wherein the water-repellent structure faces an outer layer of the waterproof and breathable upper, and the breathable waterproof film faces an inner layer of the waterproof and breathable upper.

6. The waterproof and breathable upper according to claim 1, wherein the water-repellent structure covers the first surface of the fabric upper by means of spraying or surface coating.

7. The waterproof and breathable upper according to claim 1, wherein the breathable waterproof film is adhered to the second surface of the fabric upper by means of hot-pressing.
